Europäisches Patentamt

European Patent Office

Office européen des brevets

(19)

(11) Veröffentlichungsnummer: **0 067 189**
**B1**

# (12) EUROPÄISCHE PATENTSCHRIFT

(45) Veröffentlichungstag der Patentschrift:
**11.09.85**

(21) Anmeldenummer: **82900104.9**

(22) Anmeldetag: **18.12.81**

(86) Internationale Anmeldenummer:
**PCT/EP 81/00200**

(87) Internationale Veröffentlichungsnummer:
**WO 82/02149 (08.07.82** Gazette **82/17)**

(51) Int. Cl.⁴: **B 01 D 11/02,** A 23 F 5/26,
A 23 F 3/18

(54) **EXTRAKTIONSVERFAHREN.**

(30) Priorität: **22.12.80 DE 3048420**
**31.07.81 DE 3130359**

(43) Veröffentlichungstag der Anmeldung:
**22.12.82 Patentblatt 82/51**

(45) Bekanntmachung des Hinweises auf die Patenterteilung:
**11.09.85 Patentblatt 85/37**

(84) Benannte Vertragsstaaten:
**AT BE CH DE FR GB LI LU NL SE**

(56) Entgegenhaltungen:
**DE - A - 639 775**
**FR - A - 1 189 554**

(73) Patentinhaber: **MITTEX AKTIENGESELLSCHAFT,**
**Aeulestrasse 5, FL-9490 Vaduz (LI)**

(72) Erfinder: **HUSSMANN, Peter, Via del Pucci 4,**
**I-50100 Florenz (IT)**

(74) Vertreter: **Haug, Dietmar et al, Patentanwälte Andrae,**
**Flach, Haug Steinstrasse 44, D-8000 München 80 (DE)**

**Beschreibung**

Die Erfindung betrifft ein Verfahren zur Extraktion der extrahierbaren Stoffe aus aroma- und geschmacksstoffreichen Ausgangsstoffen, insbesondere Kaffee, Tee, Heilkräuter und Gewürze oder dgl., bei welchem in aufeinanderfolgenden Verfahrenszyklen jeweils eine frische Menge des Ausgangsstoffes in gemahlener Form auf ein Filtermedium aufgebracht wird und unterschiedlich konzentrierte Extraktlösungen in der Reihenfolge abnehmender Konzentration bei einer vorbestimmten Verfahrenstemperatur und während einer vorbestimmten Zeitdauer mit dem Stoff jeweils vermischt und von ihm über das Filtermedium wieder abgetrennt werden, wobei die jeweilige Extraktlösung höchster Konzentration nach ihrer weiteren Anreicherung der Dehydratation zugeführt wird.

Aus der DE-C-639 775 ist ein Verfahren zum Extrahieren von pflanzlichen Stoffen zur Gewinnung der darin enthaltenen Extraktstoffe bekannt, bei welchem in jedem Verfahrenszyklus unterschiedlich konzentrierte Extraktlösungen, die in vorausgegangenen Verfahrenszyklen gewonnen und weiter angereichert worden sind, in der Reihenfolge abnehmender Konzentration mit dem Extraktionsgut jeweils vermischt und über ein Filtermedium wieder abgetrennt werden, wobei die Extraktlösung höchster Konzentration, die auf das noch frische Extraktionsgut gegeben wird, nach ihrer weiteren Anreicherung zur Weiterverarbeitung abgeführt wird und dafür eine Menge frischen Lösungsmittels bereitgestellt wird. Zur Extraktion wird ein Säulenextraktor verwendet, der mit dem Extraktionsgut, das zuvor gepreßt worden ist, fast vollständig gefüllt wird. Die Extraktlösungen werden nacheinander von oben auf das Extraktionsgut aufgegeben und am unteren Ende des Säulenextraktors wieder abgeführt. Die Verfahrenstemperatur liegt zunächst zwischen 45°C und 60°C und wird am Schluß der Extraktion auf einen Temperaturwert zwischen 80°C und 100°C gesteigert.

Aus der US-A-1 687 112 ist die Extraktion von aroma- und geschmacksstoffreichen Ausgangsstoffen sowie das Mahlen dieser Ausgangsstoffe vor der Extraktion bekannt. Bei dem dort beschriebenen Verfahren werden die Extraktivstoffe ebenfalls mit Extraktlösungen abnehmender Konzentration nach dem Gegenstromprinzip extrahiert. Die Verfahrenstemperatur ist während der gesamten Verfahrensdauer sehr niedrig und wird vorzugsweise unter 15°C angesetzt. Das Extraktionsgut wird zwar zuvor gemahlen, jedoch ist der Mahlgrad nicht besonders fein, denn die Teilchen haben eine Korngröße von 850 μm (20 mesh). Die Extraktion findet in einem Säulenextraktor statt, in welchem die Höhe der Schicht des Extraktionsgutes wesentlich größer als ihre Breite ist. Bevor der Extrakt höchster Konzentration aus dem Extraktor abgezogen werden kann, ist eine Standzeit von 12 Stunden erforderlich, um sicherzustellen, daß genügend Extraktivstoffe in Lösung gegangen sind.

Aus der FR-A-1 189 554 ist ein Verfahren zur Gewinnung von Pektinen aus pektinhaltigen Ausgangsstoffen bekannt, bei welchem ein Teil der Pektine durch eine Extraktion nach dem Gegenstromprinzip unter Verwendung von zuvor hergestellten Pektinlösungen unterschiedlicher Konzentration über ein Filtermedium von einer Mischung aus dem pektinhaltigen Ausgangsstoff und verdünnter Schwefel- oder Salzsäure abgetrennt wird. Die Extraktion der Pektine kann bei Raumtemperatur durchgeführt werden, und die am höchsten konzentrierte Pektinlösung wird mehrmals in die Mischung zurückgeführt, bis das Filtrat klar ist. Eine Feinstmahlung des Ausgangsstoffes vor der Extraktion und die Anordnung des Ausgangsstoffes auf dem Filtermedium in einer dünnen Schicht sind nicht vorgesehen.

Die Aufgabe der Erfindung besteht darin, das gattungsgemäße Verfahren so fortzubilden, daß bei geringem Energieeinsatz und unter weitgehendem Erhalt der Aroma- und Geschmacksstoffe eine sehr hohe Ausbeute an Extraktivstoffen erzielt wird.

Diese Aufgabe wird dadurch gelöst, daß der Ausgangsstoff zu Teilchen mit einer Korngröße von unter 100 μm zerkleinert in einer dünnen Schicht von 50 bis 100 mm Höhe auf das Filtermedium aufgebracht wird, die Verfahrenstemperatur zumindest während der weiteren Anreicherung der Extraktlösung höchster Konzentration der Raumtemperatur entspricht und während der Anreicherung von wenigstens einigen der Extraktlösungen geringerer Konzentration über der Raumtemperatur liegt und die Dauer der Vermischung und Abtrennung der Extraktlösungen nicht länger als jeweils 10 Minuten beträgt.

Auf diese Weise lassen sich außerordentlich hohe Ausbeuten mit sehr geringem Energieeinsatz erzielen. Ferner werden lange Verweilzeiten des Ausgangsstoffes in dem Extraktor vermieden. Insbesondere ist aber aufgrund einer sehr schonenden Behandlung des Ausgangsstoffes ein außerordentlich aroma- und geschmacksstoffreicher Extrakt erhältlich.

Unter dem Gesichtspunkt der Aromaerhaltung ist es bei dem erfindungsgemäßen Extraktionsverfahren von Vorteil, wenn der Ausgangsstoff unter Zusatz einer Extraktlösung hoher Konzentration gemahlen wird und in Form einer Schlämme auf das Filtermedium aufgebracht wird, denn hierdurch werden die leichtflüchtigen Aromastoffe in der Schlämme fixiert.

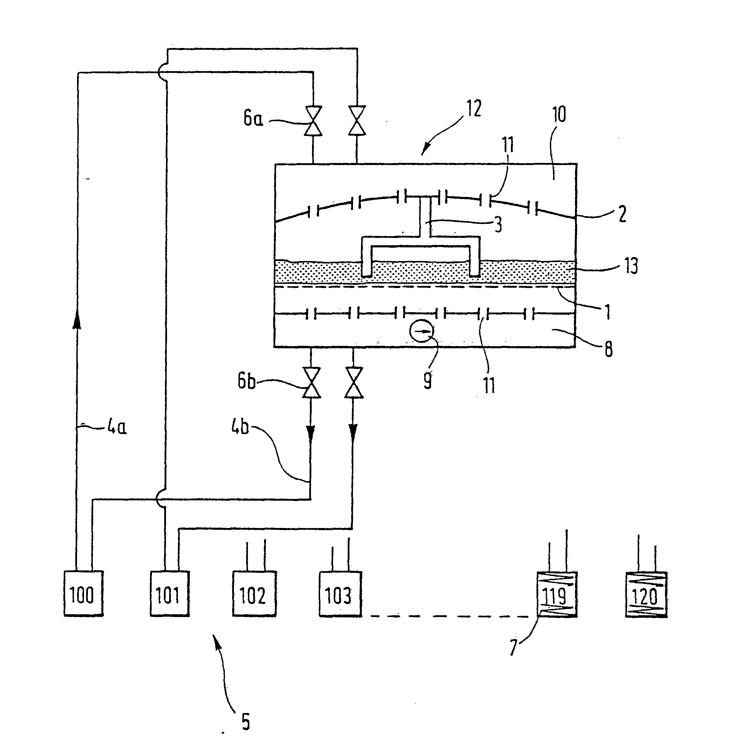

Im folgenden wird nun ein Ausführungsbeispiel der Erfindung anhand des in der Zeichnung dargestellten Fließbildes beschrieben.

Als Ausgangsstoff ist beispielsweise feinstgemahlener Kaffee mit einer Korngröße von unter 100 μm auf einem Filtermedium 1 in einem zur Erhaltung des Aromas vorzugsweise geschlossenen Filtergehäuses 2 eines Flachbettfilterextraktors 12 aufgebracht. Der Ausgangsstoff besteht aus den extrahierbaren Stoffen und den nicht extrahierbaren Bestandteilen. Die extrahierbaren Stoffe wiederum sind in Wasser löslich und enthalten Aroma- und Geschmacksstoffe. Die Schichthöhe auf dem Filtermedium 1 ist relativ gering und liegt zwischen 50 und 100 mm. Das Filtermedium kann grundsätzlich jede geeignete Form haben, so kann es z. B. stufenweise aufgebaut und relativ engporig sein, vorzugsweise wird aber ein monofiles Gewebe auf Kunststoffbasis verwendet. In jedem Fall ist aber das Filtermedium oder ein poröser Boden, auf dem es aufliegt, so dimensioniert, daß es einen Druck bis zu mehreren bar oder ein Hochvakuum ohne Deformierung aushalten kann.

Der gemahlene Kaffee kann ggf. intermittierend oder kontinuierlich mit einem Rührwerk 3 in dem Flachbettfilterextraktor gerührt werden, das auch zum Austragen des Rückstandes aus dem Filtergehäuse am Ende des Verfahrens dient. Es ist auch dazu bestimmt, in dem sich mit zunehmender Auslaugung bildenden Filterkuchen entstehende Risse zuzustreichen und Randablösungen anzudrücken. Insbesondere wenn mit Unterdruck extrahiert wird, besteht die Tendenz zur Bildung von Rissen, durch die die Lösung auf dem Weg des geringsten Widerstandes abfließen könnte, so daß keine Extraktion mehr stattfände.

An das Filtergehäuse 2 des Flachbettfilterextraktors sind über je eine Vorlaufleitung 4a und eine Rücklaufleitung 4b eine größere Anzahl von Aufnahmebehältern 5 angeschlossen. Jede Leitung 4a und 4b weist ein Ventil 6a bzw. 6b auf. Die Ventile 6a und 6b sind so schaltbar, daß jeweils ein Aufnahmebehälter an das Filtergehäuse 2 angeschlossen ist, während die jeweils anderen Aufnahmebehälter vom Filtergehäuse getrennt sind. Die Aufnahmebehälter sind beheizbar, was durch symbolhaft dargestellte Heizschlangen 7 angedeutet ist. Als Alternative zu den Heizschlangen 7 in den Behältern könnte auch eine Heizung in dem Flachbettfilterextraktor vorgesehen werden. Zwischen dem Ausgangsende des Filtergehäuses 2 und den Rücklaufleitungen 4b ist eine Zwischenkammer 8 angeordnet, in der sich eine Saugpumpe 9 befindet, um die im Filterbett entstehende Lösung durch das Filtermedium saugen zu können. Statt der Saugpumpe kann auch eine Druckpumpe verwendet werden, um das Lösungsmittel im Beispiel Wasser bzw. die Lösung durch das Filtermedium mit Druck pumpen zu können. Die Druckpumpe wäre in einer Zwischenkammer 10 nach den Vorlaufleitungen 4a angeordnet. Die Verbindung zwischen dem eigentlichen Filtergehäuse und den Zwischenkammern erfolgt über Verbindungsöffnungen 11.

Dem eigentlichen kontinuierlichen Extraktionsverfahren oder Hauptprozeß geht ein einmaliger Vorschaltprozeß zur »Einstellung« des Konzentrationsgefälles der Lösungen in den Behältern voraus. Zu Beginn dieses Vorschaltprozesses sind alle Behälter mit noch reinem Lösungsmittel gefüllt. Das in der Zeichnung linke Ende der Batterie aus den Behältern 5 ist der Batterieanfang. Das in der Zeichnung rechte Ende ist das Batterieende. Vom Batterieanfang bis zum Batterieende sind die Behälter 5, beginnend mit 100, durchnumeriert. Es wird nun zunächst in einem ersten Zyklus das Lösungsmittel aus dem Behälter 100 in den Flachbettfilterextraktor geführt, dort mit dem Kaffee intensiv vermischt und als dünne Lösung mit abnehmender Konzentration in den Behälter 100 zurückgeführt. Danach wird das Lösungsmittel aus dem Behälter 101 in den Flachbettfilterextraktor geführt, dort mit dem bereits etwas ausgelaugten Kaffee wieder intensiv vermischt und als noch dünnere Lösung als die vorhergehende in den Behälter 101 zurückgeführt. Dann wird das Lösungsmittel aus dem Behälter 102 in den Flachbettfilterextraktor geführt, dort wiederum mit dem Kaffee vermischt und als Lösung in den Behälter 102 wieder zurückgeführt. In entsprechender Weise werden die Lösungsmittelmengen der restlichen Behälter nacheinander in den Flachbettfilterextraktor und wieder zurück in den jeweiligen Behälter geführt. Hierdurch entstehen mehrere voneinander getrennte Mengen einer Lösung, deren Konzentration von Behälter zu Behälter abnimmt.

Zu Beginn eines weiteren Zyklusses wird frischer, feinstgemahlener Kaffee in den Flachbettfilterextraktor eingebracht. Dann werden alle Lösungsmengen nacheinander jeweils in den Flachbettfilterextraktor eingeführt, dort mit dem Kaffee vermischt und in den entsprechenden Behälter wieder zurückgeführt, wobei angefangen wird mit der Lösung höchster Konzentration im Behälter 100 und geendet wird mit der Lösung niedrigster Konzentration im Behälter 20. Auf diese Weise wird die Konzentration jeder Lösung erhöht. Es folgen so viele weitere Zyklen, bis sich in den Behältern Lösungsmengen mit einer jeweils bestimmten Konzentration befinden, wobei zu Beginn jeden Zyklusses der Kaffee in dem Flachbettfilterextraktor durch eine frische Menge erneuert wird.

Während im ersten Zyklus des Vorschaltprozesses das Lösungsmittel aus den ersten Behältern kalt ist, wird die Temperatur des Lösungsmittels erst aus den später folgenden Behältern von Behälter zu Behälter erhöht, so daß sie in dem Lösungsmittel aus den letzten Behältern Werte um 90° bis 100° C erreicht. Entsprechend wird die Temperatur der Lösung in den folgenden Zyklen des Vorschaltprozesses eingestellt.

In dem nachfolgenden Hauptprozeß mit beliebig oft wiederholbaren, aufeinanderfolgenden Zyklen wird zu Beginn jeden Zyklusses frischer, feinstgemahlener Kaffee in den Flachbettfilterextraktor eingebracht. In jedem Zyklus werden die Lösungsmengen aus den einzelnen Behältern nacheinander jeweils in den Flachbettfilterextraktor geführt, dort mit dem Kaffee vermischt, über das Filtermedium abgetrennt und in den entsprechenden Behälter wieder zurückgeleitet, wobei wie im Vorschaltprozeß wiederum angefangen wird mit der Lösung höchster Konzentration aus dem Behälter 100 und geendet wird mit der Lösung niedrigster Konzentration aus dem Behälter 120. Auf diese Weise wird die Konzentration der Lösung im Behälter 100 z. B. auf 35 bis 40% erhöht. Dieser Extrakt ist für die weitere Bearbeitung insbesondere für die Trocknung gut geeignet und wird nach seiner Abführung durch eine frische Lösung niedrigster Konzentration ersetzt. Die Konzentration der Lösungsmenge des Behälters 101 hat sich im Beispiel dann auf 30 bis 35% erhöht.

Die Zahl der Behälter wird so festgelegt, daß die Lösung niedrigster Konzentration immer noch eine Konzentration von 0,1% aufweist. Abhängig von der Art des Ausgangsstoffes und damit dem Schwierigkeitsgrad der Extraktion beläuft sich die Zahl der Behälter auf ungefähr 6 bis 20 Stück.

Hervorzuheben ist, daß im Hauptprozeß wie im Vorschaltprozeß die Lösungsmengen relativ hoher Konzentration (d. h. zumindest die Lösungsmenge höchster Konzentration) bei Raumtemperatur mit dem Kaffee vermischt und davon wieder getrennt werden, während die Lösungsmengen relativ niedriger Konzentration eine erhöhte Temperatur aufweisen. Die Temperatur der Lösungsmengen relativ hoher Konzentration kann auch noch im Bereich von 25 bis 50°C liegen, während die erhöhte Temperatur der Lösungsmengen niedriger Konzentration bei 90 bis 100°C liegt.

Im nächsten Zyklus des Hauptprozesses wird zunächst die Lösungsmenge aus dem Behälter 101 in das mit frischem Kaffee beschichtete Filterbett eingebracht, mit dem Kaffee vermischt und davon wieder getrennt, wobei sich die Konzentration der Lösungsmenge auf einen Wert erhöht hat, den im vorigen Zyklus die Lösungsmenge des Behälters 100 erreicht hatte. Die Konzentration der Lösungsmenge des letzten Behälters erreicht in diesem Zyklus einen Wert, der dem entspricht, den im vorigen Zyklus die Lösungsmenge des vorletzten Behälters erhalten hat.

Mit fortschreitender Trennung der jeweiligen Lösung von der Mischung aus Kaffeemehl und Lösung, wird der Kaffee zunehmend trockener und bildet letztlich einen Filterkuchen 13, der selbst eine filtrierende Wirkung ausübt. Dieser Filterkuchen kann so hart werden, daß es zweckmäßig sein kann, die nachfolgende Lösungsmenge von unten durch das Filtermedium einzuführen, um den Kaffee aufzuwirbeln und das Filtermedium einem Spüleffekt zu unterziehen. Am Ende jeden Zyklusses ist der Filterkuchen 13 jedenfalls so ausgelaugt, daß er nur noch aus einer unlöslichen Restmasse besteht.

Eine hohe Ausbeute von 50% wird dadurch erzielt, daß anstelle normal gemahlenen Kaffees feinstgemahlener Kaffee mit einer Teilchengröße von unter 100 µm verwendet wird. Die Beheizung der Behälter erfolgt derart, daß jeweils in den Behältern, in denen momentan die Lösungsmengen relativ niedriger Konzentration lagern, die höchsten Temperaturen erzeugt werden, während in den Behältern, in denen die Lösungsmengen relativ hoher Konzentration enthalten sind, die niedrigen Temperaturen herrschen.

Um eine unerwünschte Fermentierung zu vermeiden, werden die im Kreislauf befindlichen Lösungsmittelmengen bzw. Lösungsmengen unter Inertgas gestellt. Dies ist insbesondere dann nützlich, wenn die Anlage zweitweise, z. B. während längerer Betriebsruhe, stillgesetzt wird. Als Inertgas kann Stickstoff oder Kohlendioxyd oder eine Mischung von beiden verwendet werden. Durch die Imprägnierung mit Inertgas werden die Lösungsmengen in fermentativer oder bakterieller Hinsicht stabilisiert.

Inertgas kann auch dazu verwendet werden, um zu Beginn des Verfahrens dem Kaffee die besonders leicht flüchtigen Aromastoffe zu entziehen. Dieses mit Aromastoffen angereicherte Inertgas kann dann dem im anschließenden Dehydratationsverfahren getrockneten Extrakt zugeführt werden, um die Aromastoffe an den Trockenextrakt abzugeben, der dann entsprechend mit diesen Stoffen angereichert wird. Auf diese Weise ist ein Instantkaffee erhältlich, der in seinem Geschmack oder Aromagehalt nicht oder kaum von einem sehr gut aufbereiteten frischen Kaffe zu unterscheiden ist.

Die im Extraktionsprozeß befindlichen Flüssigkeitsmengen können auch bei großer Produktion relativ klein gehalten werden, weil der Durchlauf beispielsweise auch von 12 Stufen (Behälter 5) sich in ein bis zwei Stunden durchführen läßt, weil die Extraktion bei relativ geringer Höhe des Ausgangsstoffes im Extraktor bei den dünnen Lösungen in wenigen Minuten und auch bei den stärker angereicherten Lösungen nicht länger als 5 bis 10 Minuten dauert.

Von Bedeutung zur Erzielung einer maximalen Ausbeute ist, daß der Ausgangsstoff in stark zerkleinerter Form, d. h. mit einer Teilchengröße von unter 100 µm, in den Flachbettfilterextraktor eingebracht wird. Der Ausgangsstoff kann trocken oder naß gemahlen werden. Zur Naßmahlung wird dem Ausgangsstoff eine Lösungsmenge höchster Konzentration aus dem Behälter 100 zugesetzt. Bei aromareichen Ausgangsstoffen werden in der durch die Naßmahlung hergestellten Schlämme die leicht flüchtigen Aromastoffe fixiert.

Bei dem eben beschriebenen Ausführungsbeispiel ist Kaffee als Ausgangsstoff verwendet worden. Das Verfahren und die Vorrichtung zu dessen Durchführung können aber mit Erfolg auch bei der Extraktion von anderen aromareichen Stoffen, wie Tee, Heilkräuter und Gewürze angewendet werden. Selbst bei der Extraktion von Stoffen, bei denen es nicht auf die Aromaerhaltung ankommt, wie z. B. bei Pektinen, sind das Verfahren und die Vorrichtung zu dessen Durchführung anwendbar. Für diesen Fall können die Lösungsmengen auf andere Temperaturen gebracht werden als beim Kaffee. Auch braucht der Flachbettfilterextraktor kein geschlossenes Gehäuse aufweisen, sondern es genügt ein offenes Gehäuse.

## Patentansprüche

1. Verfahren zur Extraktion der extrahierbaren Stoffe aus aroma- und geschmacksstoffreichen Ausgangsstoffen, insbesondere Kaffee, Tee, Heilkräuter und Gewürze oder dgl., bei welchem in aufeinanderfolgenden Verfahrenszyklen jeweils eine frische Menge des Ausgangsstoffes in gemahlener Form auf ein Filtermedium aufgebracht wird und unterschiedlich konzentrierte Extraktlösungen in der Reihenfolge abnehmender Konzentration bei einer vorbestimmten Verfahrenstemperatur und während einer vorbestimmten Zeitdauer mit dem Stoff jeweils vermischt und von ihm über das Filtermedium wieder abgetrennt werden, wobei die jeweilige Extraktlösung höchster Konzentration nach ihrer weiteren Anreicherung der Dehydratation zugeführt wird, dadurch gekennzeichnet, daß der Ausgangsstoff zu Teilchen mit einer Korngröße von unter 100 µm zerkleinert in einer dünnen Schicht von 50 bis 100 mm Höhe auf das Filtermedium aufgebracht wird, die Verfahrenstemperatur zumindest während der weiteren Anreicherung der Extraktlösung höchster Konzentration der Raumtemperatur entspricht und während der Anreicherung von wenigstens einigen der Extraktlösungen geringerer Konzentration über der Raumtemperatur liegt und die Dauer der Vermischung und Abtrennung der Extraktlösungen nicht länger als jeweils 10 Minuten beträgt.

2. Verfahren nach Anspruch 1, dadurch gekennzeichnet, daß der Ausgangsstoff unter Zusatz einer Extraktlösung hoher Konzentration gemahlen und in Form einer Schlämme auf das Filtermedium aufgebracht wird.

3. Verfahren nach Anspruch 1 oder 2, dadurch gekennzeichnet, daß die Extraktlösungen von dem Ausgangsstoff durch Absaugen wieder abgetrennt werden.

## Claims

1. A process for the extraction of the extractable substances from aroma- and flavor-rich starting substances, in particular coffee, tea, officinal herbs and spices of the like, in which in successive process cycles respectively a fresh quantity of the starting substance is in ground form applied onto a filter medium and extract solutions of varying concentration are respectively mixed with the substances in the order of decreasing concentration at a predetermined process temperature and during a predetermined period of time and are separated from said substance again through the filter medium, with the respective extract solution of maximum concentration being, after it has been further enriched, supplied to dehydration, characterized in that the starting substance is, comminuted to form particles of a grain size of less than 100 µm, applied in a thin layer of from 50 to 100 mm thickness onto the filter medium, in that the process temperature at least during the further enrichment of the extract solution of maximum concentration corresponds to room temperature and is during enrichment of at least a few of the extract solutions of lower concentration at above room temperature and in that the duration of mixing and separation of the extract solutions respectively does not exceed 10 minutes.

2. The process of claim 1, characterized in that the starting substance is ground under the addition of an extract solution of high concentration and is applied in the form of a slurry onto the filter medium.

3. The process of claim 1 or 2, characterized in that the extract solutions are separated from the starting substance again through suction.

## Revendications

1. Procédé d'extraction de matières séparables à partir de produits de base riches en substances aromatiques et sapides, café, thé, plantes, médicinales, épices ou autres notamment, dans lequel une quantité fraîche de matière première moulue est déposée sur un milieu filtrant dans chacun des cycles successifs et des solutions d'extrait de concentrations différentes sont respectivement mélangées au produit, par ordre de concentration décroissante, à une température process et pendant une période prédéfinies, pour en être à nouveau séparées par le milieu filtrant, chaque solution d'extrait de concentration maximale étant envoyée en déshydratation après son enrichissement ultérieur, caractérisé en ce que le produit de base, réduit en particules d'une granulométrie inférieure à 100 µm, est réparti en une couche mince de 50 à 100 mm de hauteur sur le milieu filtrant, la température du procédé est égale à la température ambiante, pendant l'enrichissement de la solution d'extrait de concentration maximale du moins, mais excède la température locale pendant l'enrichissement de quelques solutions d'extrait au moins de concentration minimale, la durée du mélange et de la séparation des solutions d'extrait ne dépassant pas 10 minutes dans chaque cas.

2. Procédé selon la revendication 1, caractérisé en ce que le produit initial est broyé en ajoutant une solution d'extrait de forte concentration, puis déposé sur le milieu filtrant sous la forme d'une pulpe.

3. Procédé selon une des revendications 1 et 2, caractérisé en ce que les solutions d'extrait sont séparées du produit de base par aspiration.